# EUROPEAN PATENT APPLICATION

(11) **EP 3 364 054 A1**
(43) Date of publication of application: **22.08.2018**
(21) Application number: 17156721.7
(22) Date of filing: 17.02.2017
(51) Int. Cl.: F16B 15/00, E04B 1/26, E04D 1/34, E04D 13/158

(54) **END CLIP FOR BATTEN**

(71) Applicant: Marley Eternit Ltd, Burton upon Trent DE14 3HD (GB)
(72) Inventor: CANT, Andrew F., Leicestershire, LE4 3BP (GB)
(74) Representative: Vaeck, Elke

(57) **Abstract**

A clip, which can be used to secure the end of a roofing batten, comprises a clamping plate for covering the roofing batten end, at least two legs projecting from opposing sides of the clamping plate, which are adapted to grip the sides of the batten end. The clamping plate of the clip also comprises a plurality of perforations distributed along its area, and each of the perforations has at least three edge protrusions suitable for clasping a fastening means, such as a nail, introduced through any of the perforations for fixing the clip together with other pieces to a batten.

## Description

### Field of the invention

The invention relates to the field of construction. More specifically it relates to an end clip for a batten, such as a roofing batten.

### Background of the invention

When a roof is built up from tiles, typically a structure of battens is used on which the tiles are positioned. Such battens are usually made of wood and should be protected from impact of water, e.g. rain, in order to increase their lifetime. Basically, two alternatives are known to obtain such protection.

In one alternative, special tiles are used to cover the end portions of the battens. Such special tiles (e.g. barge tiles) are used as the last roof tile in the row adjacent to the verge of the roof. The barge tiles comprise a part for covering the roof, and a bent part forming an angled wing, which covers the border of the roof and the end portions of the battens on which the tiles are positioned.

In another alternative, special plastic end pieces are provided, e.g. plastic verge units and verge caps, or in general verge pieces. They do not only provide specific protection to the end portions of the battens, but can also provide decoration with a lot of freedom of design. Such end pieces also are easily interchangeable in case of damage. In order to secure the verge pieces and avoid its detachment from the batten (e.g. during strong winds or due to changes of volume caused to changes in humidity and temperature), verge pieces are usually attached to the battens via nails or screws, and then optionally covered by additional caps, for example by sliding them on compatible verge pieces. However, the use of nails may cause the ends of the roofing battens to split.

In order to avoid batten splitting, and to further improve fixation of verge pieces to the batten ends, additional lips are added between the verge pieces and the batten ends. These clips have flaps or legs which hold together the end of the batten, keeping the integrity of the battens. Clips for battens comprise a face and two legs which grip the batten end. These clips are made of stainless steel, which is a strong material that suffers little or no environmental damage over time. However, traditional stainless steel clips are usually very thick and heavy. Because the clips need to be attached together with the verge, usually a perforation or opening is included in the clamping plate in order to allow driving a nail through the clip, to fix the verge piece. However, driving a nail precisely through the opening is not easy, because the opening is usually covered by the opaque verge piece, as both the unit and clip are installed simultaneously with the same nail or screw to the batten. This increases the difficulty of installation, which induces the installation time. Moreover, the nails and/or verge pieces may be damaged during installation.

### Summary of the invention

It is an object of embodiments of the present invention to provide a clip of a batten end, e.g. an end of a roofing batten, with good grip.

It is an advantage of embodiments of the present invention that clips are provided for mounting verge pieces that allow efficient installation, resulting in a reduction of installation time.

It is an advantage of embodiments of the present invention that clips can be provided for protecting a batten end, which are relative light compared to conventional steel clips.

The present invention relates to a clip for a batten end, the clip comprising a clamping plate for covering the roofing batten end, at least two legs adapted to grip the sides of the roofing batten end, the at least two legs projecting from opposing sides of the clamping plate,
wherein the clamping plate further comprises a plurality of perforations distributed along its area, wherein each of the perforations further comprises at least three edge protrusions suitable for clasping a fastening means introduced through any of the perforations. Edge protrusions are protrusions inwards the perforation, i.e. towards the center of the perforation.

It is an advantage of embodiments of the present invention that the clip can be secured to the batten end, and its fixation to the nail or screw used to fix the clip and any other piece such as the verge piece is improved. It is a further advantage that the clip and, optionally, the verge piece can be secured using a plurality of nails or screws at different positions, e.g. non-parallel position to the edge of the clamping plate, thus reducing the possibility of clip sliding or tilting once installed on the batten end/

The clip may comprise steel material.

The steel material may be spring steel.

Examples of such suitable steel alloys are carbon steel, such as CS67, optionally being phosphate coated carbon steel, stainless steel, such as e.g. BS304. Preferred is the use of spring steel, such as medium-carbon steel or high-carbon steel with a very high yield strength, e.g. CS67.

The perforations may comprise four edge protrusions.

The perforations may be cross shaped. It is an advantage of embodiments of the present invention that optimum clasping of fastening means is obtained with a low manufacture cost.

It is an advantage of embodiments of the present invention that light weight and relatively thin clips can be obtained, reducing manufacturing costs, and improving fixation of the clip to the fastening means.

The clip may comprise two legs at each of the opposing sides of the clamping plate.

The clip may comprise two legs at one side of the clamping plate and one leg at the opposing side. It is an advantage of embodiments of the present invention that nested manufacture of several clips can be obtained from a single sheet of metal, thus reducing waste material.

The clip may comprise two legs at one side of the clamping plate and two legs at the opposing side. In comparison with the embodiments having only one leg at one side, the embodiments with two legs at each side may not have the benefit of reduction of waste material. However It is an advantage of embodiments that four sides, two at each side, may provide an increased grip to the batten, and a more easy setup of tooling and facilitating more easy handling of the clip during manufacturing, e.g. when the clip is made by die cutting from flat sheets.

The angle between the legs at at least one side of the clamping plate and the clamping plate may be an angle of less than 90°.

More preferred, the angle may range from 75° to 90°, typically between 80° and 89°, e.g. 87°

The legs may comprise barbs 113. It is an advantage of embodiments of the present invention that gripping of the clip to the batten end is improved.

The present invention also relates to a blank of sheet material comprising pre-formed folding lines and cutting lines, the blank being configured such that when cut and/or stamped and folded along the lines it forms a clip for a batten end according to any of the previous claims.

The present invention furthermore relates to a kit of parts for protecting an end of a batten, the kit of parts comprising a clip as described above or a blank of sheet material for forming a clip as described above and a fixation means for fixing the clip to the end of the batten.

The fixation means may comprise a nail.

The fixation means may comprise at least one of an annular ring nail, a ring shank nail, a screw shank nail or a spiral shank nail.

The largest diameter of the shank of the nail may be smaller than the smallest circumscribed circle of the perforation, said largest diameter of the shank of the nail is larger than the largest incircle of the perforation. An incircle thereby is a circle which can be inscribed in the perforation, without crossing the periphery of the perforation.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 illustrates a top and lateral view of a clip according to some embodiments of the present invention.
FIG. 2 illustrates a profile view and a perspective of a clip according to some embodiments of the present invention.
FIG. 3 illustrates a lateral and profile views of a clip according to some embodiments of the present invention.
FIG. 4 illustrates a blank for obtaining a clip of embodiments of the present invention.
FIG. 5 shows a manufacturing layout of two clips of embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to "fastening means", reference is made to fasteners such as bolts or nails, the present invention not being limited to these examples. Fastening means may also include screws. Annular ring nails, ring shank nails, screw shank nails or spiral shank nails are preferred.

In a first aspect, the present invention relates to clips for roofing battens. These clips ensure that battens, which usually comprise fibrous material (e.g. wood), do not break longitudinally when a verge piece is nailed or screwed to their end. In order to install the verge pieces with clips, first the clip is fixed to the batten. The clamping plate of the clip covers the surface of the batten end perpendicular to the longitudinal axis of the batten, and the gripping legs of the clip are attached to the longitudinal surfaces of the batten end. The verge piece is attached to the batten with fastening means, for example by screws or nails, through a perforation in the clamping plate. The clips of the present invention comprise several openings or perforations through which a nail or screw can potentially pass, improving chances of introducing the nail through the clamping plate correctly, thus saving time, and reducing the risk of damaging the verge piece due to failures in the trial-and-error nailing or screwing, or due to bent nails. Thus, driving a fastening means through a perforation of the clip is advantageously easier, even if covered by an opaque verge piece. The perforations are shaped so as to receive and hold the fastening means. This clip further allows the possibility of fixing the verge piece and clip to the batten end effectively with more than one nail. For example, two or more nails can be used at different and distant positions, ensuring that the clip and verge will not rotate, tilt or slide from their position, in case of e.g. changes of volume of the clip and/or batten (due to changes in environmental conditions such as temperature, humidity, etc.).

The clip of the present invention comprises a clamping plate, which may have any suitable shape and may for example be square or rectangular, with at least one leg projecting out of each of two opposing sides of the clamping plate. Preferably the clamping plate overlaps partially or completely the end face surface of the batten to which it is intended to be mounted. The shortest distance between at least one leg projecting out of a first of two opposing sides of the clamping plate and at least one leg projecting out of a second of two opposing sides of the clamping plate, is about equal to one of the length or width of the end face of the batten to which the clip is intended to be mounted.

The perforations of the clamping plate may have any suitable shape, for example three-leaf or four-leaf clover, cross-shaped. The perforations can be distributed in any suitable way, such as for example in equidistant rows in the whole area of the clamping plate, but other configurations are also possible, such as concentric rows, triangular mosaics, etc.

The minimum inter-distance between two adjacent perforations is preferably more than 1.8mm, more preferably 2mm or more. The interdistance between two adjacent perforations is the smallest distance between the periphery of said perforations.

Sufficient perforations are to be provided, such that the chance of introducing the fastening means through one of the perforations is high. The surface of all perforations together is preferably more than 15% of the total surface of the clamping plate. The surface of all perforations together is usually less than 50% of the total surface of the clamping plate

In order to improve attachment, the perforations can be made of similar size as the nails used to fix the verge piece.

The perforations for receiving the fixation means comprise protrusions inwardly the perforation opening that 'bite' the nail or screw, improving fixation. Thus, some or all the perforations further comprise at least three inward protrusions spread around their edge, for clasping a fastening means. For example, perforations may in general be circular, rectangular, rhombical or square holes provided with at least three rim protrusions, for example triangular protrusions, but other hole shapes are possible such as, oval or circular tabs. The perforations can be used with any type of fastening means, such as bolts or nails. Advantageously, annular ring nails, spiral shaft nails, screw shank nails or ring shank nails can be used. These nails have rings or ribs along the shaft, allowing the protrusions to fit between two adjacent rings. These types of nail, in combination with the clips of the present invention, advantageously improve clip and verge piece fixation.

Preferably the maximum diameter of the shaft of the nails used, which diameter usually is equal all along the shaft, is preferably tuned to the dimensions of the perforations. The largest or maximum diameter of the shank of the nail is preferably smaller than the smallest circumscribed circle of the perforation, whereas this largest diameter of the shank of the nail preferably is larger than the largest incircle of the perforation.

When driving such nail through the perforation, the protrusion may be downwards inclined and grip to the shaft of the nail. This not only in case of annular ring nails, spiral shaft nails, screw shank nails or ring shank nails. This is also the case when nails with a smooth outer shank surface is used.

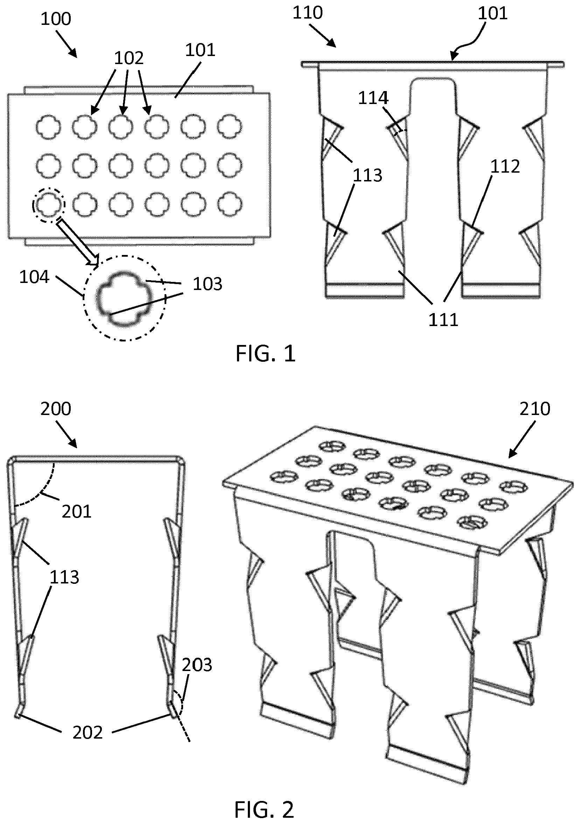

In embodiments of the present invention, the clip has legs adapted to grip the sides of a batten. For example, at least two legs at each opposing side of the clamping plate project out of the plane formed by the clamping plate. For example, only one leg per opposing side of the clapping plate is provided, but other configurations are possible, for example one leg at one side and two at the opposing side; or two legs at each side as shown in FIG. 1 and 2, improving fixation. For example, displacement or e.g. detachment of the clip from the batten end is reduced.

In embodiments of the present invention, legs comprise barbs, which anchor to the batten sides for better grip. The barbs can be form by torn edges which bend inwards, forming angled bent areas on the edge of the leg, or small tabs machined at the edge and bent inwards. Any other structure can be used, for example, the short sides of rectangular tabs can be cut from the edge and the tab can be bent inwards, or for example the barbs can be formed by punched shapes in the center of the leg rather than at its edge, etc.

Each leg may comprise a plurality of barbs, for example two at each leg edge.

In embodiments of the present invention, the material forming the clip comprises a metal with high yield strength, e.g. spring steel. This improves gripping of the legs to the batten ends. With this type of metal, the protrusions of the perforations are deformed when the nail is inserted, but tend to spring back. Thus, an improved clasp of the nail or screw can be obtained. Further, use of spring steel also allows obtaining strong and light clips. For example, suitable materials include austempered steel, carbon steel, such as CS67, stainless steel, such as e.g. BS304. Preferred is the use of spring steel, such as medium-carbon steel or high-carbon steel with a very high yield strength, e.g. CS67.The clip may further comprise zinc and/or phosphorous coating, or the metal may be galvanized, etc.

FIG. 1 shows, in the left drawing 100, a top view of an exemplary clip. The rectangular clamping plate 101 comprises a plurality of circular perforations 102. In this case, the perforations are distributed as three rows comprising six perforations per row. Each perforation comprises four rim protrusions 103, as shown in the zoomed part 104.

In the right drawing 110, a lateral view of an exemplary clip is shown, comprising two legs 111 at each of the long sides of the clamping plate 101. However, legs may be alternatively connected to the short sides of the clamping plate, or in both the short and long sides. The edges of each leg may be parallel to each other forming a rectangular leg, or the legs may be slightly tapered as shown in the figure, forming an angle between each leg edge of, for example, 4° . The provision of tapered legs facilitates a more easy die cutting of the outer periphery of the clip from a flat steel sheet. Each leg comprises small cuts 112 or torn edges, forming two angled bent areas on the edge of the legs. This areas are bent inwards, forming the barbs 113 at the leg edges. The angle 114 of the bent areas with respect to the leg's edge may be 32°, but other angles can be used.

FIG. 2 shows, in the right drawing 200, a profile view of the exemplary clip of FIG. 1. The angle 201 between the legs and the clamping plate may be 90° The angle is advantageously slightly lower than 90°, for example between 80 and 90°, for example 87° for the legs on at least one of the sides of the clamping plate. improving grip of the clip to the sides of the batten. More preferred, all legs have an angle to the clamping plate in these ranges. This figure clearly shows how the barbs 113 are bent inwards towards the clamping plate for anchoring to the sides of the batten, further improving the grip. The barbs may be bended inwards over an angle in the range of 10 to 40°, typically about 20° to 25°.

The end of the legs include flaps 202 which help sliding and positioning the clip on the batten end. The flaps may be formed by bending the end of the leg by an angle 203 of e.g. 155°, but other angles can be used.

In the left drawing 210, a perspective view of the clip of FIG. 1 is shown. Although in the following portions particular dimensions are described, these are only given by way of example and embodiments of the present invention are not limited thereto. The clip may be obtained from a single sheet of an appropriate thickness, e.g. 1.5, 1 or 0.8 mm. The dimensions of the clamping plate can be 47x26 mm, which is a suitable size for a standard batten end, but it can be adapted to other dimensions. The perforations may have a radius of for example 2.1 mm, but other suitable sizes can be chosen according to the diameter of the fastening means to be used. The particular case of FIG. 1 and 2 shows three rows with 7 mm of separation between their centers, each row comprising six perforations separated by 6.5 mm (measured from perforation center to center). The amount of perforations depend on the size of the clamping plate, and the distribution should optimize the chance to drive a fastening means through the verge plate and the clamping plate properly.

The protrusions can be symmetrically placed. For instance, the four protrusions may be placed at 90° of each other. The maximum and minimum distances between opposite protrusions may be 3.25 and 3.2 mm respectively, and the distance between adjacent protrusions may be 2.3 mm. These values can be adapted for optimum attachment with different standards or types of nails or screws, and also some tolerance in these values is expected.

The height of the clip may be between 30mm and 60mm, e.g. about 45 mm (thus, the legs may have approximately that length, or slightly longer, depending on the bending angles 201, 203). This parameters can be adapted to the type of batten end. The tapered legs at the same side of the clamping plate can have a separation so that distinct legs are formed. Also, in order to improve folding during manufacture, the legs may be distanced from the short sides of the clamping plate..

Each barb in the legs may comprise an oblique cut. For example, the cuts can be done in the edges of each leg e.g. at predetermined distances from the clamping plate, obtaining a first and second pair of barbs per leg, respectively. Because the barbs are bent inwards, the distances between the peaks of barbs in opposing legs should be smaller than the width of the clamping plate. In this case, the distance between the peaks of the first and second pair of barbs is 21.95 mm and 19.96 mm, respectively. In embodiments of the present invention, some or all the corners may be rounded.

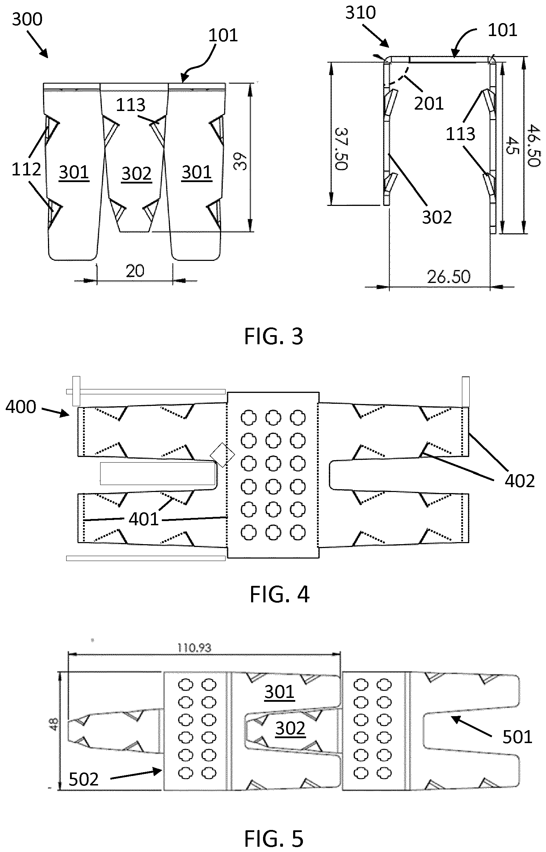

Legs can present different shapes and sizes, for example the legs of a clip may be equal, or they may be different in shape and/or size, for example rectangular, tapered, tongue-shaped, etc. They may comprise barbs in only one edge, or in both edges. FIG. 3 shows, in the left drawing 300, a lateral view of another exemplary clip comprising two tapered legs 301 at one side of the clamping plate 101, each comprising two barbs 113, and a single tongue-shaped leg 302 at the opposing side of the clamping plate, comprising four barbs 113. This configuration presents good grip while saving material (three legs rather than four), which may be useful in case a thicker sheet is needed (in case, for instance, the available metal sheet does not have optimum yield strength).

In the right drawing 310, a profile view of the clip shows the barbs 113 bent inwards and the angle 201 between the clamping plate 101 and the legs 301, 302, in this case being 90°.

The sizes shown in the drawing are in mm. However, they are just an exemplary embodiment and other sizes can be used at wish or depending on the size of battens, grip needed, etc.

Clips of the present invention can be used with wooden battens, polymeric or fiber-reinforced polymeric battens (e.g. fiberglass), etc.

In a further aspect, the present invention comprises a blank, e.g. a metalworks blank, containing folding and cutting lines for obtaining the clip of the first aspect when the blank is machined and/or stamped and folded according to the folding and cutting lines. FIG. 4 shows a suitable blank 400 comprising dotted lines as folding lines 401, and full lines as machining, cutting and/or punching lines 402. Other suitable designs may improve manufacture.

FIG. 5 shows an exemplary design improvement which improves manufacture by reducing waste material. The tongue-shaped leg 302 of a blank 501 for a clip according to FIG. 3 may be nested between the two tapered legs 301 of another blank 502 for another clip also according also to FIG. 3, because as shown in the figures, the two tapered legs 301 are longer than the tongue-shaped leg 302, thus several clips can be obtained by punching the blanks close to each other, which helps reducing waste material.

In an aspect of the present invention, a steel clip to cover the end of a batten roof can be obtained for example by stamping and folding flat sheets of spring steel.

## Claims

1. A clip for a batten end, the clip comprising
- a clamping plate (101) for covering the roofing batten end,
- at least two legs (111, 301, 302) adapted to grip the sides of the roofing batten end, the at least two legs projecting from opposing sides of the clamping plate (101),
- wherein the clamping plate (101) further comprises a plurality of perforations (102) distributed along its area, wherein each of the perforations further comprises at least three edge protrusions (103) suitable for clasping a fastening means introduced through any of the perforations (102).

2. A clip according to the previous claim comprising steel material.

3. A clip according to claim 2, the steel material being spring steel.

4. A clip according to any of the previous claims wherein the perforations (102) comprise four edge protrusions (103).

5. A clip according to claim 4 wherein the perforations (102) are cross shaped.

6. A clip according to any of the previous claims wherein the clip comprises two legs (111) at each of the opposing sides of the clamping plate.

7. A clip according to claims 1 to 5 wherein the clip comprises two legs (301) at one side of the clamping plate (101) and one leg (302) at the opposing side.

8. A clip according to claims 1 to 5 wherein the clip comprises two legs (401) at one side of the clamping plate and two leg (401) at the opposing side.

9. A clip of any of the previous claims, wherein the angle (201) between the legs (111) at at least one side of the clamping plate and the clamping plate (101) is an angle of less than 90°.

10. A clip of any of the previous claims wherein the legs comprise barbs 113.

11. A blank (400) of sheet material comprising pre-formed folding lines (401) and cutting lines (402), the blank being configured such that when cut and/or stamped and folded along the lines it forms a clip for a batten end according to any of the previous claims.

12. A kit of parts for protecting an end of a batten, the kit of parts comprising a clip according to any of claims 1 to 9 or a blank of sheet material for forming a clip according to claim 10 and a fixation means for fixing the clip to the end of the batten.

13. A kit of parts according to claim 11, wherein the fixation means comprises a nail

14. A kit of parts according to claim 11 or 12, wherein the fixation means comprises at least one of an annular ring nail, a ring shank nail, a screw shank nail or a spiral shank nail.

15. A kit of parts according to claim 12 or 13, wherein the largest diameter of the shank of the nail is smaller than the smallest circumscribed circle of the perforation, said largest diameter of the shank of the nail is larger than the largest incircle of the perforation.
